# FASCICULE DE BREVET EUROPEEN

(11) **EP 4 007 019 B1**
(45) Date de publication et mention de la délivrance du brevet: **04.10.2023**
(21) Numéro de dépôt: 21208300.0
(22) Date de dépôt: 15.11.2021
(51) Int. Cl.: H01M 8/00, H01M 8/026, H01M 8/0263, H01M 8/0267, C25B 9/01, C25B 1/042, C25B 9/67, C25B 9/75, C25B 9/77

(54) **PLAQUE BIPOLAIRE POUR RÉACTEUR ÉLECTROCHIMIQUE**
BIPOLARPLATTE FÜR EINEN ELEKTROCHEMISCHEN REAKTOR
BIPOLAR PLATE FOR ELECTROCHEMICAL REACTOR

(30) Priorité: 26.11.2020 FR 2012184
(43) Date de publication de la demande: 01.06.2022
(73) Titulaire: Commissariat à l'Énergie Atomique et aux Énergies Alternatives, 75015 Paris (FR)
(72) Inventeur: POIROT-CROUVEZIER, Jean-Philippe, 38054 GRENOBLE CEDEX 09 (FR)
(74) Mandataire: Cabinet Nony

(56) Documents cités:
- EP-A1- 3 223 352
- EP-A1- 3 621 137
- WO-A1-2004/107486
- CN-A- 110 828 843
- US-A1- 2011 123 887

## Description

La présente invention concerne un réacteur électrochimique, notamment une pile à combustible ou un électrolyseur, qui est constitué d'un empilement de plaques bipolaires et d'assemblages membrane-électrodes (aussi appelés AME). L'invention porte plus spécifiquement sur une plaque bipolaire pour un réacteur électrochimique, comportant des tôles ménageant des canaux pour la circulation de fluides réactifs.

### Domaine technique

Cette invention s'applique notamment au domaine des piles à combustible. L'invention peut s'appliquer aux piles à combustible alimentées avec de l'hydrogène comme combustible, mais elle peut également s'appliquer pour d'autres combustibles, comme le méthanol par exemple.

Une pile à combustible est un empilement de cellules élémentaires dans lesquelles a lieu une réaction électrochimique entre deux fluides réactifs, le combustible et le comburant, qui sont introduits de manière continue. Le combustible est apporté au contact de l'anode, le comburant au contact de la cathode. La réaction est subdivisée en deux demiréactions, à savoir une oxydation et une réduction, qui ont lieu en présence d'un conducteur ionique entre les deux électrodes, l'électrolyte, et d'un conducteur électrique, le circuit électrique externe, d'une part à l'interface anode / électrolyte et d'autre part à l'interface cathode / électrolyte.

Chaque cellule élémentaire est constituée d'un coeur de pile ou assemblage membrane-électrodes (AME), associé à des plaques bipolaires assurant à la fois la distribution des fluides réactifs, la collecte des produits, la transmission de l'énergie électrique et thermique produite, et la séparation physique des différents compartiments anodique, cathodique et de refroidissement, parfois avec l'aide de joints.

### Technique antérieure

La demande de brevet FR 3 049 391 décrit une plaque bipolaire comportant une première et une deuxième tôles conductrices. Un circuit de refroidissement dans lequel s'écoule un fluide caloporteur est ménagé entre les deux tôles. La première tôle conductrice comporte des bossages disposés dans des canaux et tous alignés entre eux dans les deux directions du plan. La deuxième tôle comporte des bossages disposés dans des canaux et disposés en quinconce. Avec une telle répartition des bossages, dans certaines zones de la plaque bipolaire, le fluide caloporteur s'écoule au travers de conduits fins et peu nombreux, ce qui provoque une perte de charge dans le circuit de refroidissement. De plus, les différentes séparations et recombinaisons de canaux peuvent générer des comportements turbulents qui entrainent des pertes de charges.

Il existe donc un besoin pour diminuer la perte de charge dans le circuit de refroidissement sans pour autant provoquer une perte de charge dans les canaux de distribution des fluides réactifs.

### Résumé de l'invention

L'invention vise à répondre à ce besoin et a pour objet, selon un premier de ses aspects, une plaque bipolaire pour réacteur électrochimique, comportant au moins une tôle anodique et une tôle cathodique, ayant chacune une face interne et une face externe, les tôles anodique et cathodique étant en contact l'une avec l'autre par leur face interne, chaque tôle anodique et cathodique comportant sur sa face externe des canaux pour la circulation de fluides réactifs, lesdits canaux délimitant, au niveau des faces internes des tôles anodique et cathodique, des conduits de refroidissement pour l'écoulement d'un fluide caloporteur,
les canaux des tôles anodique et cathodique comportant une alternance de bossages et d'enfoncements,
les bossages de la tôle anodique étant disposés en quinconce et les bossages de la tôle cathodique étant disposés en quinconce.

On désigne par "tôle anodique" une tôle ayant sa face externe destinée à être en contact avec une anode du réacteur électrochimique. On désigne par "tôle cathodique" une tôle ayant sa face externe destinée à être en contact avec une cathode du réacteur électrochimique. Les tôles anodique et cathodique sont des tôles conductrices, par exemple faites à partir d'un matériau métallique, notamment de métal. Les tôles anodique et cathodique peuvent être faites à partir de tout matériau conducteur qui peut être mis en forme. Les tôles anodique et cathodique peuvent être des tôles embouties, les canaux, bossages et enfoncements pouvant être réalisés par emboutissage.

### Canaux

On désigne par "canal" une dépression dans une tôle anodique ou cathodique, qui peut notamment s'étendre longitudinalement. Il peut être allongé suivant un axe longitudinal de la tôle. Par exemple, il peut prendre la forme d'une rainure. Chaque tôle anodique ou cathodique peut notamment comporter une pluralité de canaux s'étendant parallèlement les uns aux autres, notamment régulièrement. Les canaux d'une tôle peuvent par exemple être espacés les uns des autres d'une distance d qui peut être constante lorsque l'on se déplace le long du canal, et qui peut être la même pour deux canaux consécutifs d'une tôle, voire pour tous les canaux d'une tôle. La distance d peut être constante lorsque l'on se déplace le long du canal, et peut être la même pour tous les canaux des deux tôles anodique et cathodique.

On entend par "axe longitudinal X" de la plaque bipolaire un axe général d'écoulement des fluides réactifs et du fluide caloporteur dans la plaque bipolaire. Chaque canal d'une tôle peut s'étendre sensiblement selon cet axe longitudinal X ou selon un axe longitudinal qui lui est parallèle. Tous les canaux d'une tôle peuvent ainsi s'étendre suivant l'axe longitudinal X. De préférence, les canaux de la tôle anodique et de la tôle cathodique s'étendent suivant l'axe longitudinal X.

On entend par "axe transversal Y" un axe perpendiculaire à l'axe longitudinal X. Ainsi, les axes longitudinal X et transversal Y définissent un plan médian de la plaque bipolaire.

Un canal peut être de section transversale constante, prise perpendiculairement à l'axe longitudinal X.

Les canaux peuvent par exemple avoir une largeur *e*, qui peut être constante lorsque l'on se déplace le long du canal, et qui peut être la même pour deux canaux d'une tôle, voire pour tous les canaux d'une tôle. La largeur *e* est mesurée selon l'axe transversal Y. La largeur *e* peut être constante lorsque l'on se déplace le long du canal, et peut être la même pour tous les canaux des deux tôles anodique et cathodique.

Les canaux de la tôle anodique peuvent être décalés transversalement par rapport aux canaux de la tôle cathodique. Ainsi, lorsque les deux tôles sont en contact l'une avec l'autre, les canaux de la tôle anodique peuvent ne pas être superposés aux canaux de la tôle cathodique.

Les canaux et/ou les conduits de refroidissement peuvent présenter une largeur sensiblement constante le long de l'axe longitudinal X. Les conduits de refroidissement peuvent avoir une largeur sensiblement égale au double de la largeur des canaux. Ainsi, les conduits de refroidissement peuvent ne pas présenter de zone d'étranglement qui provoquerait une diminution de débit de fluide caloporteur.

### Nervures

Les canaux peuvent ménager entre eux des nervures, qui peuvent notamment s'étendre longitudinalement. Les nervures peuvent comporter un dessus sensiblement plat, notamment du côté de la face externe. Le dessus des nervures peut venir en contact avec l'anode ou la cathode dans le réacteur électrochimique. Ces nervures peuvent s'étendre sensiblement selon l'axe longitudinal X. Les nervures peuvent être de section transversale constante, prise perpendiculairement à l'axe longitudinal X. L'épaisseur d'une nervure peut correspondre à la distance d entre deux canaux consécutifs. L'écart entre deux nervures consécutives peut correspondre à la largeur *e* d'un canal.

La largeur *e* des canaux peut être égale à la distance d entre deux canaux. En variante, la largeur *e* des canaux peut être supérieure à la distance d entre deux canaux, par exemple elle peut être égale au double. En variante, la largeur *e* des canaux peut être inférieure à la distance d entre deux canaux, par exemple elle peut être égale à la moitié.

Les canaux de la tôle anodique peuvent être décalés par rapport aux canaux de la tôle cathodique d'une distance égale à la distance d. Ainsi, la nervure d'une tôle s'insère dans le canal de l'autre tôle. Les deux tôles peuvent s'imbriquer au moins partiellement. Cette imbrication partielle permet de réduire l'encombrement de la plaque bipolaire.

### Bossages

Les bossages de la tôle anodique peuvent être disposés en quinconce par rapport aux bossages de la tôle cathodique.

On désigne par "bossage" une zone du canal où la dépression formant le canal est plus faible. Ces bossages forment des bosses lorsque l'on observe la tôle correspondante avec la face externe au-dessus de la face interne, et des dépressions lorsque l'on observe la tôle correspondante avec la face externe en-dessous de la face interne. La hauteur des bossages peut être inférieure à la hauteur des nervures. Ainsi les fluides réactifs peuvent circuler au-dessus des bossages. Les bossages occupent au plus 90%, mieux au plus 75%, encore mieux au plus 60%, par exemple ils occupent 50% environ de la profondeur des canaux.

Les bossages peuvent empêcher partiellement la circulation des fluides réactifs dans les canaux. Néanmoins, la perte de charge dans la circulation des fluides réactifs est acceptable pour le bon fonctionnement du réacteur électrochimique. Ils peuvent au contraire ménager des conduits de refroidissement permettant la circulation du fluide caloporteur.

On désigne par "enfoncement" une zone du canal où la dépression formant le canal est plus importante. Ces enfoncements peuvent avoir un fond sensiblement plat. Les enfoncements et les dessus des nervures sensiblement plans permettent d'assurer un bon contact entre les deux tôles de la plaque bipolaire ainsi qu'un bon contact entre l'anode ou la cathode et la tôle correspondante. Au sein des canaux, selon l'axe longitudinal X, les enfoncements peuvent être de forme complémentaire à celle des bossages, c'est-à-dire que dans un canal les zones non enfoncées sont des bossages et les zones sans bossages sont des enfoncements.

Par « disposés en quinconce », on entend que les bossages de la tôle anodique sont décalés longitudinalement et transversalement les uns par rapport aux autres et que les bossages de la tôle cathodique sont décalés longitudinalement et transversalement les uns par rapport aux autres.

Les bossages de la tôle anodique peuvent également être décalés longitudinalement et transversalement par rapport aux bossages de la tôle cathodique.

La disposition en quinconce des bossages d'une tôle par rapport à l'autre permet de ménager les conduits de refroidissement et ainsi permet de former un circuit de refroidissement entre les tôles. Le fluide caloporteur peut circuler d'un bossage d'un canal de la tôle anodique à un bossage d'un canal de la tôle cathodique successivement. Ces bossages étant en quinconce, le fluide caloporteur peut ainsi progresser le long de l'axe longitudinal X. Le fluide caloporteur peut s'écouler suivant un axe formant des courbures, notamment des ondulations, par exemple sinusoïdalement, entre les bossages des deux tôles anodique et cathodique. En variante, le fluide caloporteur peut s'écouler suivant un axe d'écoulement sensiblement rectiligne, notamment rectiligne, entre les bossages des deux tôles anodique et cathodique.

Au moins un bossage de la tôle anodique peut être en contact avec au moins un bossage de la tôle cathodique, mieux avec au moins deux bossages, encore mieux avec trois bossages.

Au moins un bossage de la tôle cathodique peut être en contact avec au moins un bossage de la tôle anodique, mieux avec au moins deux bossages, notamment avec deux bossages.

Au moins un bossage de la tôle anodique peut être en contact avec au moins deux bossages de la tôle cathodique et/ou au moins un bossage de la tôle cathodique peut être en contact avec au moins deux bossages de la tôle anodique.

Dans un mode de réalisation, au moins un bossage de la tôle anodique peut être en contact avec deux bossages de la tôle anodique et au moins un bossage de la tôle anodique peut être en contact avec trois bossages de la tôle cathodique.

Sur au moins 75% de leur longueur totale, les bossages de la tôle anodique sont en contact avec au moins un bossage de la tôle cathodique, mieux sur au moins 90% de leur longueur totale, les bossages de la tôle anodique sont en contact avec au moins un bossage de la tôle cathodique, encore mieux sur au moins 95% de leur longueur totale, les bossages de la tôle anodique sont en contact avec au moins un bossage de la tôle cathodique.

Grâce à ces contacts entre bossages des deux tôles, le fluide caloporteur peut s'écouler d'un bossage à un autre, en particulier d'un bossage d'un canal de la tôle anodique à un bossage d'un canal de la tôle cathodique successivement ou/et d'un bossage d'un canal de la tôle cathodique à un bossage d'un canal de la tôle anodique successivement, pour progresser selon la direction générale X. La section de passage des conduits de refroidissement varie peu, notamment en largeur, le long de l'écoulement. Elle peut par exemple être sensiblement de l'ordre d'un multiple de la largeur d'un canal, notamment de deux fois la largeur d'un canal, étant supérieure à la largeur d'un canal. La section de passage de l'écoulement peut varier sur moins de 30%, mieux moins de 20 %, par exemple de l'ordre de 10% de la longueur totale de l'écoulement. On entend par "longueur totale de l'écoulement" la distance parcourue par le fluide caloporteur entre son entrée et sa sortie des conduits de refroidissement. Il y a donc peu de rétrécissement des conduits de refroidissement, et peu de division et/ou recombinaison de l'écoulement.

Chaque bossage de la tôle anodique peut être en contact avec au moins un bossage de la tôle cathodique, par exemple avec deux ou trois bossages de la tôle cathodique. Chaque bossage de la tôle cathodique peut être en contact avec au moins un bossage de la tôle anodique, par exemple avec deux ou trois bossages de la tôle anodique.

Le contact entre un bossage de la tôle anodique et un bossage de la tôle cathodique peut se faire sur les faces latérales des bossages, par rapport à l'axe longitudinal X.

La tôle anodique et la tôle cathodique peuvent chacune comporter des motifs. Les motifs peuvent être composés d'un bossage et d'un enfoncement consécutifs dans un même canal. Les motifs de la tôle anodique peuvent tous être d'une première longueur et les motifs de la tôle cathodique peuvent tous être d'une deuxième longueur. La longueur d'un motif correspond à la longueur cumulée d'un bossage et d'un enfoncement consécutifs.

Les motifs de la tôle anodique peuvent tous être d'une première longueur et les motifs de la tôle cathodique peuvent tous être d'une deuxième longueur.

Les motifs d'une même tôle peuvent tous avoir la même longueur, mesurée suivant un axe longitudinal. En variante, tous les motifs d'une même tôle n'ont pas la même longueur. Au moins 50% des motifs d'une même tôle peuvent avoir la même longueur, mieux au moins 70%, mieux au moins 80%, mieux au moins 90%, par exemple de l'ordre de 95%.

La première longueur peut être différente de la deuxième longueur. Une telle différence de longueur permet de créer un circuit de refroidissement dans lequel les restrictions d'écoulement du fluide de refroidissement sont réduites.

Grâce à la plaque bipolaire selon l'invention, les pertes de charges dans le circuit de refroidissement peuvent être réduites. Par rapport à une plaque bipolaire de l'art antérieur où une seule tôle anodique ou cathodique comporte des bossages disposés en quinconce, on observe une réduction de près de 40% de la perte de charge dans le circuit de refroidissement.

Une telle disposition des bossages avec des longueurs de motifs différentes permet de faire en sorte que les conduits de refroidissement présentent peu, voire pas, de rétrécissement. Les conduits de refroidissement sont ainsi d'une largeur suffisante pour permettre un bon écoulement du fluide caloporteur. On évite ainsi la présence de conduits de refroidissement trop étroits. Les conduits de refroidissement peuvent être d'une largeur au moins égale à deux fois la largeur e d'un canal. La plaque bipolaire selon l'invention permet d'éviter la formation de conduits étroits qui réduisent l'écoulement du fluide caloporteur, sans pour autant réduire la taille des canaux de distribution de fluides réactifs. Une telle solution permet ainsi de ne pas nuire à l'efficacité du réacteur électrochimique.

La première longueur peut être supérieure à la deuxième longueur.

La longueur des bossages de la tôle anodique peut être supérieure à la longueur des bossages de la tôle cathodique. La longueur des motifs de la tôle anodique peut être supérieure à la longueur des motifs de la tôle cathodique.

Une telle différence de longueur permet d'assurer un flux du fluide réactif à la tôle cathodique supérieure au flux du fluide réactif à la tôle anodique. Le débit de fluide réactif pouvant être plus faible à l'anode qu'à la cathode, le choix des longueurs permet alors de réduire la perte de charge dans le circuit de refroidissement.

La longueur d'un bossage de la tôle anodique peut être le double ou le quadruple de la longueur d'un bossage de la tôle cathodique. La longueur d'un motif de la tôle anodique peut être le double ou le quadruple de la longueur d'un motif de la tôle cathodique.

Le rapport entre la première et la deuxième longueur peut être sensiblement entier. Ce rapport peut par exemple être compris entre n + ε et n - ε avec n un entier positif et ε un nombre réel compris entre 0 et 1. En particulier, le rapport entre la première et la deuxième longueur peut être un entier. De préférence on choisit ε petit, notamment proche voire très proche de 0, de sorte que le décalage de longueur entre les motifs de la tôle anodique et les motifs de la tôle cathodique reste quasiment constant. Si le décalage reste faible, on évite de l'accroitre au fur et à mesure de l'écoulement, et on évite ainsi une perte de contact entre les bossages de la tôle anodique et de la tôle cathodique.

L'utilisation d'un rapport entier permet d' éviter l'introduction de perte de charge dans l'écoulement du fluide caloporteur et permet d'assurer un contact entre un bossage de la tôle anodique et un bossage adjacent de la tôle cathodique.

Un rapport entre la première et la deuxième longueur entier ou très proche d'un entier permet d'utiliser des tôles anodique et/ou cathodique de plus grande longueur puisque le décalage entre les bossages des deux tôles ne s'accroit pas suffisamment pour provoquer une perte de contact.

Le rapport entre la première et la deuxième longueur peut être un entier pair. Lorsque le rapport entre la première et la deuxième longueur est pair, la direction générale d'écoulement du fluide caloporteur peut être sensiblement parallèle, notamment parallèle, aux bords des tôles anodique et cathodique de la plaque bipolaire. Ceci permet de pouvoir alimenter et récupérer le fluide caloporteur simplement en disposant des collecteurs aux extrémités des tôles anodique et cathodique.

Lorsque le rapport entre la première et la deuxième longueur est impair, la direction d'écoulement du fluide caloporteur peut être inclinée d'un angle d'inclinaison α par rapport à l'axe longitudinal X. L'angle d'inclinaison α peut être compris entre 2 et 45°, mieux entre 5 et 30°, mieux entre 10 et 20°, par exemple de l'ordre de 15°. Dans ce cas, il peut être nécessaire d'alimenter et de récolter le fluide caloporteur par les côtés des tôles anodique et cathodique.

Le rapport entre la première et la deuxième longueur peut être égal à 2 ou à 4, étant par exemple égal à 2. Lorsque le rapport entre la première et la deuxième longueur est égale à 2 ou 4, la direction d'écoulement peut être sensiblement parallèle à l'axe longitudinal X et un contact peut être assuré entre les bossages adjacents de la tôle anodique et de la tôle cathodique.

La longueur d'au moins un enfoncement de la tôle anodique et/ou de la tôle cathodique peut être inférieure à la longueur d'au moins un bossage de ladite tôle.

Au moins 70% des enfoncements, mieux au moins 80% des enfoncements, encore mieux au moins 90% des enfoncements, par exemple tous les enfoncements d'une tôle anodique et/ou cathodique peuvent être de longueur inférieure à la longueur des bossages de ladite tôle.

De préférence, dans la tôle anodique, la longueur des enfoncements est inférieure à la longueur des bossages. Cette longueur supérieure des bossages permet d'offrir un espace plus grand pour la circulation du fluide réactif.

De préférence, la longueur des bossages de la tôle anodique peut être supérieure à la longueur des bossages de la tôle cathodique. La longueur des motifs de la tôle anodique peut être supérieure à la longueur des motifs de la tôle cathodique. Cette plus grande longueur des bossages de la tôle anodique permet d'être en accord avec le débit de gaz qui est plus faible à l'anode. Par exemple dans le cas d'une pile à dihydrogène - dioxygène, comme il n'y a que 21% d'oxygène dans l'air, le débit minimum de réactif à injecter est déjà plus du double à la cathode comparé à l'anode. La consommation progressive du réactif oblige à suralimenter la cathode pour limiter la chute de concentration. On a donc souvent besoin d'un débit trois à cinq fois supérieur côté cathode. Il est donc utile de limiter la perte de charge du côté de la cathode, avec des bossages moins longs.

La longueur d'au moins un enfoncement de la tôle anodique et/ou cathodique peut être égal à la longueur des bossages. Dans un motif, la longueur de l'enfoncement est égale à la longueur du bossage. De préférence, dans tous les motifs d'une tôle, la longueur de l'enfoncement est égale à la longueur du bossage.

Au moins 70% des enfoncements, mieux au moins 80% des enfoncements, encore mieux au moins 90% des enfoncements, par exemple tous les enfoncements, peuvent avoir une longueur égale à la longueur des bossages.

Les canaux peuvent comporter des portions courbes.

Par exemple, les canaux peuvent comporter une alternance de portions rectilignes et de portions courbes. L'utilisation de tôles avec des canaux comportant des portions courbes permet de réduire les ondulations de l'écoulement du fluide caloporteur. Un écoulement de fluide caloporteur sensiblement rectiligne peut ainsi être obtenu. Un tel écoulement permet notamment de réduire la perte de charge dans les canaux de refroidissement.

De préférence, les portions courbes des canaux de la tôle anodique peuvent avoir la même courbure que les portions courbes des canaux de la tôle cathodique. Les portions rectilignes des canaux de la tôle anodique peuvent être parallèles aux portions rectilignes des canaux de la tôle cathodique. Les canaux de la tôle cathodique peuvent suivre les canaux de la tôle anodique.

Les canaux et/ou les bossages peuvent être obtenus par emboutissage ou hydroformage des tôles anodique et/ou cathodique.

Ces méthodes ont pour avantages d'être économiques et de permettre de produire rapidement un nombre important de tôles anodique et/ou cathodique.

L'invention a également pour objet, selon un autre de ses aspects, un réacteur électrochimique comportant :
- une plaque bipolaire telle que décrite ci-dessus,
- un assemblage membrane/électrode, dont l'une au moins des électrodes est au contact de la tôle anodique ou de la tôle cathodique de la plaque bipolaire.

L'assemblage membrane/électrode peut comporter une cathode, une anode, et une membrane électrochimique disposée entre l'anode et la cathode. La tôle anodique a sa face externe destinée à être en contact avec une anode du réacteur électrochimique. La tôle cathodique a sa face externe destinée à être en contact avec une cathode du réacteur électrochimique.

Le réacteur électrochimique peut être une pile à combustible, par exemple une pile à hydrogène PEMFC ou une pile alcaline SAFC ou SOFC. En variante, le réacteur électrochimique peut être un électrolyseur. L'invention est particulièrement adaptée aux applications fonctionnant à basse température, par exemple inférieure à 250°C.

### Brève description des dessins

L'invention pourra être mieux comprise à la lecture de la description qui va suivre, d'exemples de mise en oeuvre non limitatifs de celle-ci, et à l'examen du dessin annexé, sur lequel :
[Fig 1a] la figure 1a est une vue de dessus, schématique et partielle, d'une tôle cathodique selon l'art antérieur,
[Fig 1b] la figure 1b est une vue de dessus, schématique et partielle, d'une tôle anodique selon l'art antérieur,
[Fig 1c] la figure 1c est une vue de dessus, schématique et partielle, d'un circuit de refroidissement ménagé entre les deux tôles des figures 1a et 1b,
[Fig 2a] la figure 2a est une vue schématique en perspective d'une tôle cathodique selon l'invention,
[Fig 2b] la figure 2b est une vue schématique en perspective d'une tôle anodique selon l'invention,
[Fig 2c] la figure 2c est une vue de dessus, schématique et partielle, d'un circuit de refroidissement ménagé entre les deux tôles des figures 2a et 2b,
[Fig 3a] la figure 3a est une vue analogue à la figure 2c d'une variante de réalisation,
[Fig 3b] la figure 3b est une vue analogue à la figure 2c d'une variante de réalisation,
[Fig 3c] la figure 3c est une vue analogue à la figure 2c d'une variante de réalisation,
[Fig 4a] la figure 4a est une vue analogue à la figure 2b d'une variante de réalisation,
[Fig 4b] la figure 4b est une vue analogue à la figure 2a d'une variante de réalisation, et
[Fig 4c] la figure 4c est une vue de dessus, schématique et partielle, d'un circuit de refroidissement ménagé entre les deux tôles des figures 4a et 4b.

### Description détaillée

Sur les figures et dans la suite de la description, les mêmes références représentent des éléments identiques ou similaires.

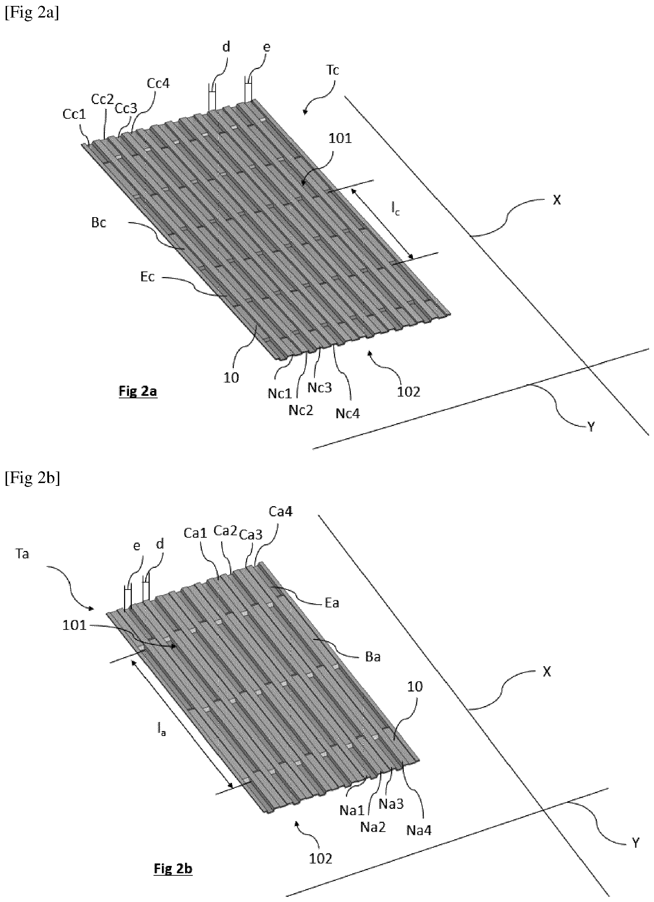

On a illustré aux figures 2a et 2b un exemple de tôle cathodique Tc et de tôle anodique Ta selon l'invention. Ces tôles Tc, Ta comportent chacune une face externe 101 et une face interne 102. Dans le cas de la tôle cathodique Tc, la face externe 101 est destinée à être en contact avec une cathode du réacteur électrochimique. Dans le cas de la tôle anodique Ta, la face externe 101 est destinée à être en contact avec une anode du réacteur électrochimique. Ces tôles Tc, Ta sont faites à partir d'un matériau métallique pouvant être mis en forme.

La tôle cathodique Tc comporte des canaux Cc1, Cc2, Cc3, Cc4, qui s'étendent sensiblement selon un axe longitudinal X et la tôle anodique Ta comporte des canaux Ca1, Ca2, Ca3, Ca4 qui s'étendent sensiblement selon l'axe longitudinal X. Tous les canaux Cc1, Cc2, Cc3, Cc4, Ca1, Ca2, Ca3, Ca4 ont une même largeur *e*, qui est sensiblement constante le long de l'axe longitudinal X.

Les canaux Cc1, Cc2, Cc3, Cc4 ménagent entre eux des nervures Nc1, Nc2, Nc3, Nc4. Les canaux Ca1, Ca2, Ca3, Ca4 ménagent entre eux des nervures Na1, Na2, Na3, Na4. Dans le mode de réalisation représenté, les nervures Nc1, Nc2, Nc3, Nc4, Na1, Na2, Na3, Na4 comportent un dessus 10 sensiblement plat. Ces nervures Nc1, Nc2, Nc3, Nc4, Na1, Na2, Na3, Na4 s'étendent sensiblement selon l'axe longitudinal X. et sont de section transversale constante, prise perpendiculairement à l'axe longitudinal X. L'épaisseur d'une nervure Nc1, Nc2, Nc3, Nc4 correspond à la distance d entre deux canaux consécutifs Cc1, Cc2, Cc3, Cc4. L'épaisseur d'une nervure Na1, Na2, Na3, Na4, correspond à la distance d entre deux canaux consécutifs Cc1, Ca1, Ca2, Ca3, Ca4. La largeur *e* des canaux est égale à la distance d entre deux canaux.

Tous les canaux des deux tôles Cc1, Cc2, Cc3, Cc4, Ca1, Ca2, Ca3, Ca4 comportent une alternance de bossages Bc, Ba et d'enfoncements Ec, Ea.

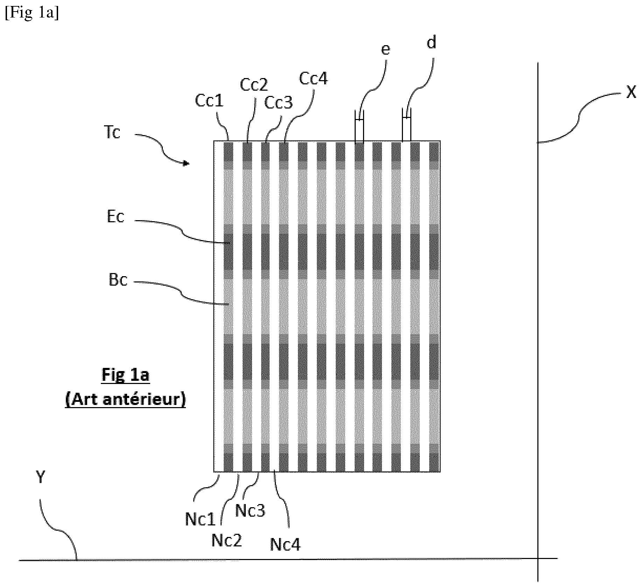

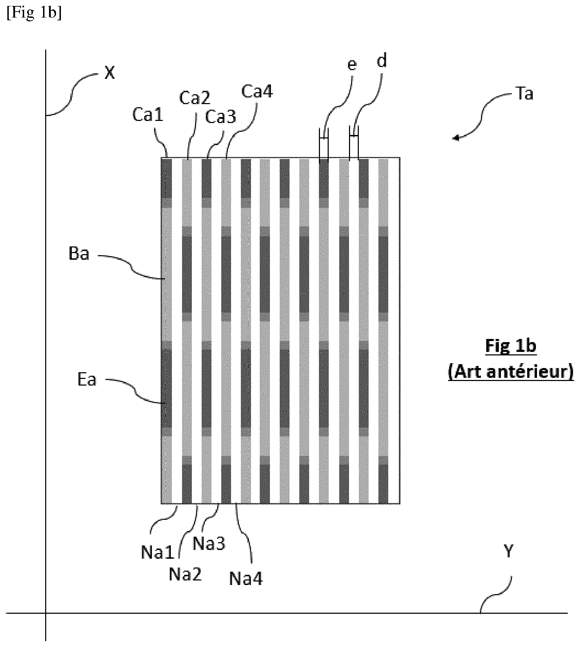

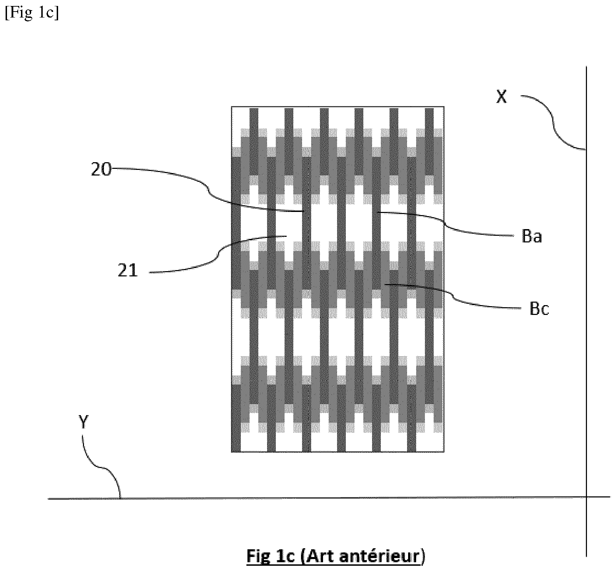

Dans l'exemple de mode de réalisation de l'art antérieur, la tôle cathodique Tc, schématisée à la figure 1a, comporte des canaux Cd, Cc2, Cc3, Cc4 qui comportent une alternance de bossage Bc et d'enfoncement Ec alignés et la tôle anodique Ta, schématisée à la figure 1b, comporte des canaux Ca1, Ca2, Ca3, Ca4 qui comportent une alternance de bossage Ba et d'enfoncement Ea disposés en quinconce. Le circuit de refroidissement qui est ménagé entre ces deux tôles est schématisé à la figure 1c. Le fluide caloporteur s'écoule à travers les conduits 20 qui sont formés par la succession de bossages anodique Ba et cathodique Bc.

Sur les tôles selon l'invention, représentées aux figures 2a et 2b, les bossages cathodique Bc et les enfoncements cathodique Ec sont disposés en quinconce et les bossages anodique Ba et les enfoncements anodique Ea sont également disposés en quinconce. Par exemple, sur la tôle cathodique Tc un bossage dans le canal Cc2 est en regard d'un enfoncement dans le canal Cc1 et d'un enfoncement dans le canal Cc2 lorsqu'on observe la tôle selon l'axe transversal Y. De même sur la tôle anodique Ta un bossage du canal Ca2 est en regard d'un enfoncement dans le canal Ca1 et d'un enfoncement dans le canal Ca2 lorsqu'on observe la tôle selon l'axe transversal Y. Un bossage d'un canal est donc au même niveau qu'un enfoncement d'un canal adjacent.

Pour former un réacteur électrochimique selon l'invention, on superpose les deux tôles Ta, Tc en empilant la tôle anodique Ta sur la tôle cathodique Tc. On met en contact les faces internes 102 des deux tôles Les canaux Ca1, Ca2, Ca3, Ca4 de la tôle anodique Ta sont décalés suivant l'axe latéral Y par rapport aux canaux Cc1, Cc2, Cc3, Cc4 de la tôle cathodique Tc d'une distance d.

Ainsi, le canal d'une tôle s'insère dans la nervure de l'autre tôle. Par exemple, la nervure Nc1 s'insère dans le canal Ca4, la nervure Nc2 s'insère dans le canal Ca3, la nervure Nc3 s'insère dans le canal Ca2, la nervure Nc4 s'insère dans le canal Ca1, et ainsi de suite sur toute la largeur des tôles. De même, la nervure Na1 s'insère dans le canal Cc4, la nervure Na2 s'insère dans le canal Cc3, la nervure Na3 s'insère dans le canal Cc2, la nervure Na4 s'insère dans le canal Cc1, et ainsi de suite sur toute la largeur des tôles. Les deux tôles Tc, Ta s'imbriquent ainsi partiellement. Cette imbrication partielle permet de réduire l'encombrement de la plaque bipolaire.

Les bossages de la tôle anodique Ba peuvent être décalés suivant l'axe longitudinal X par rapport aux bossages de la tôle cathodique Bc. Les bossages de la tôle anodique Ba sont décalés suivant l'axe latéral Y par rapport aux bossages de la tôle cathodique Bc puisque les canaux Ca1, Ca2, Ca3, Ca4 de la tôle anodique Ta sont décalés suivant l'axe latéral Y par rapport aux canaux Cc1, Cc2, Cc3, Cc4 de la tôle cathodique Tc. Au moins une partie des bossages Ba de la tôle anodique Ta sont ainsi disposés en quinconce par rapport aux bossages Bc de la tôle cathodique Tc.

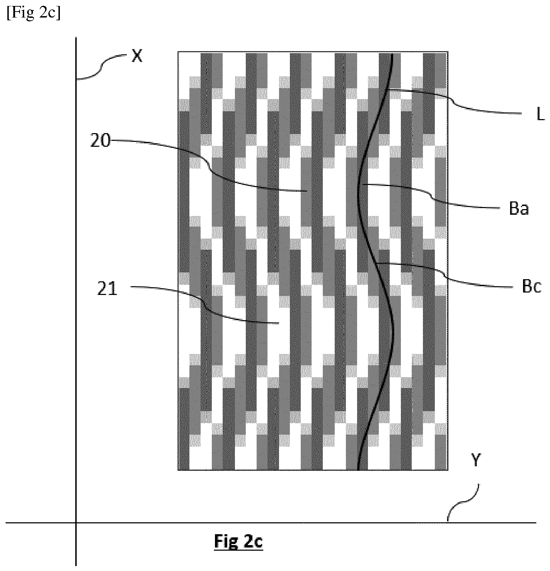

La disposition en quinconce des bossages de la tôle anodique Ba par rapport aux bossages de la tôle cathodique Bc permet, lorsque les deux tôles sont superposées, de ménager des conduits de refroidissement 20 visibles sur la figure 2c. Les zones 21 entre les conduits de refroidissements 20 sont des zones où le fluide caloporteur ne s'écoule pas. Un circuit de refroidissement est ainsi formé entre les tôles Ta, Tc. Le fluide caloporteur circule d'un bossage Ba d'un canal Ca1, Ca2, Ca3, Ca4 de la tôle anodique à un bossage Bc d'un canal Cd, Cc2, Cc3, Cc4 de la tôle cathodique successivement, puis à nouveau vers un bossage de Ca1', Ca2'. Ces bossages Ba, Bc étant en quinconce, le fluide caloporteur peut ainsi progresser le long de l'axe longitudinal X. La disposition des bossages en quinconce permet la continuité de l'écoulement du fluide caloporteur selon l'axe longitudinal X, en passant d'un bossage anodique à un bossage cathodique et réciproquement. Dans l'exemple illustré à la figure 2c, le fluide caloporteur s'écoule en suivant une ligne L qui comporte des portions courbes. Dans cet exemple, chaque bossage de la tôle anodique Ba est en contact avec trois bossages de la tôle cathodique Bc.

Un motif de la tôle anodique correspond à un bossage Ba et un enfoncement Ea consécutifs dans un même canal. Un motif de la tôle cathodique correspond à un bossage Bc et un enfoncement Ec consécutifs dans un même canal. Les motifs de la tôle anodique sont tous d'une même longueur *lₐ* et les motifs de la tôle cathodique sont tous d'une même longueur *l_{c}.* Dans l'exemple de réalisation représenté aux figures 2a, 2b, 2c, la longueur *lₐ* des motifs de la tôle anodique est supérieure à la longueur *l_{c}* des motifs de la tôle cathodique. Dans cet exemple, le rapport entre la longueur *lₐ* des motifs anodiques et la longueur *l_{c}* des motifs cathodiques est sensiblement égal à 2.

Cette différence de longueur associée à la disposition en quinconce des bossages d'une tôle par rapport à l'autre permet de créer un circuit de refroidissement dans lequel les restrictions d'écoulement du fluide de refroidissement sont réduites. En particulier, la section offerte à l'écoulement du fluide caloporteur est au moins égale à la largeur de deux canaux soit une largeur égale à 2e. A certains endroits, la section offerte à l'écoulement du fluide caloporteur est égale à la largeur de trois canaux, soit une largeur égale à 3e.

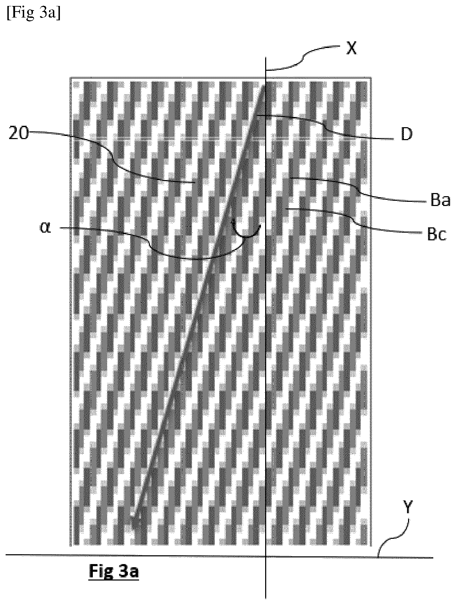

On a illustré à la figure 3a le circuit de refroidissement obtenu par la superposition d'une tôle anodique Ta et d'une tôle cathodique Tc qui comportent des bossages disposés en quinconce et dont le rapport des longueurs des motifs est sensiblement égal à 1.

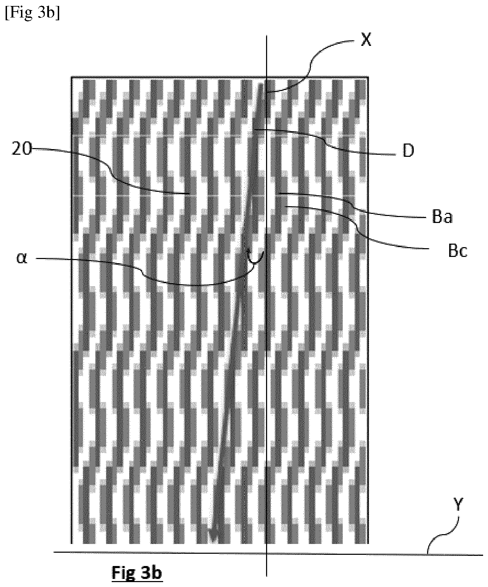

On a illustré à la figure 3b le circuit de refroidissement obtenu par la superposition d'une tôle anodique Ta et d'une tôle cathodique Tc qui comportent des bossages disposés en quinconce et dont le rapport des longueurs des motifs est sensiblement égal à 3.

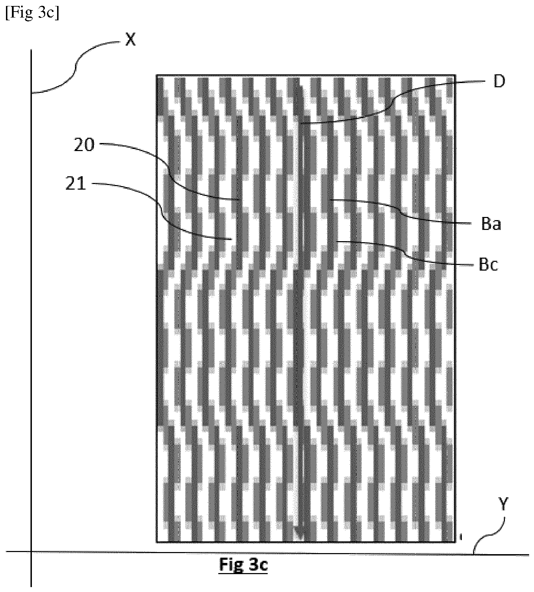

On a illustré à la figure 3c le circuit de refroidissement obtenu par la superposition d'une tôle anodique Ta et d'une tôle cathodique Tc qui comportent des bossages disposés en quinconce et dont le rapport des longueurs des motifs est sensiblement égal à 4.

Lorsque le rapport entre la longueur des bossages de la tôles anodique *lₐ* et la longueur des bossages de la tôle cathodique *l_{c}* est impair, comme illustré sur les figures 3a et 3b, la direction d'écoulement D du fluide caloporteur est inclinée d'un angle d'inclinaison α par rapport à l'axe longitudinal X. L'angle d'inclinaison α peut être compris entre 2 et 45°, mieux entre 5 et 30°, mieux entre 10 et 20°, par exemple de l'ordre de 15°. Dans ce cas, il peut être nécessaire d'alimenter et de récolter le fluide caloporteur par les côtés des tôles anodique et cathodique.

Lorsque le rapport entre la longueur des motifs de la tôle anodique *lₐ* et la longueur des motifs de la tôle cathodique *l_{c}* est pair, comme illustré sur les figures 2c et 3c, la direction d'écoulement D est sensiblement parallèle à l'axe longitudinal X.

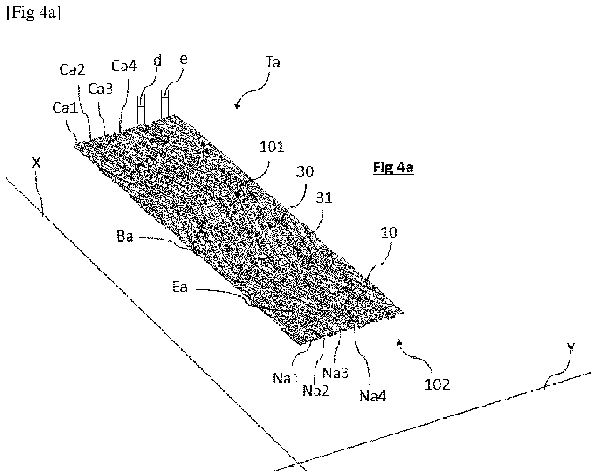

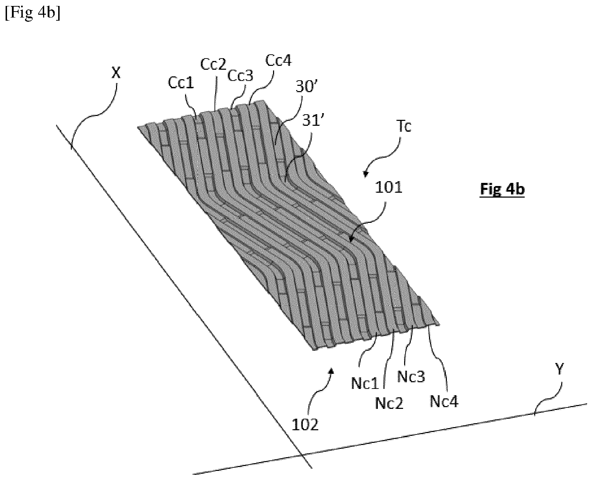

On a illustré aux figures 4a, 4b les tôles anodique Ta et cathodique Tc d'une variante de réalisation de l'invention. Dans cette variante, les canaux Ca1, Ca2, Ca3, Ca4, Cc1, Cc2, Cc3, Cc4, ne s'étendent pas selon un axe longitudinal X. Dans ce mode de réalisation, les canaux Ca1, Ca2, Ca3, Ca4 de la tôle anodique Ta comportent une alternance de portions rectilignes 30 et de portions courbes 31. Dans ce mode de réalisation également, les canaux Cc1, Cc2, Cc3, Cc4 de la tôle cathodique Tc comportent une alternance de portions rectilignes 30' et de portions courbes 31'. Les portions courbes 31 des canaux de la tôle anodique Ta ont la même courbure que les portions courbes 31' des canaux de la tôle cathodique Tc. Les portions rectilignes 30 des canaux de la tôle anodique Ta sont parallèles aux portions rectilignes 30' des canaux de la tôle cathodique Tc. Ainsi, les canaux de la tôle cathodique Cc1, Cc2, Cc3, Cc4 suivent les canaux de la tôle anodique Ca1, Ca2, Ca3, Ca4.

Dans ce mode de réalisation la longueur des bossages anodique Ba est supérieure à la longueur des bossage cathodique Bc.

De même que dans le mode de réalisation des figures 2a et 2b, pour former un réacteur électrochimique selon l'invention, on superpose les deux tôles Ta, Tc en empilant la tôle anodique Ta sur la tôle cathodique Tc et en mettant en contact les faces internes 102 des deux tôles.

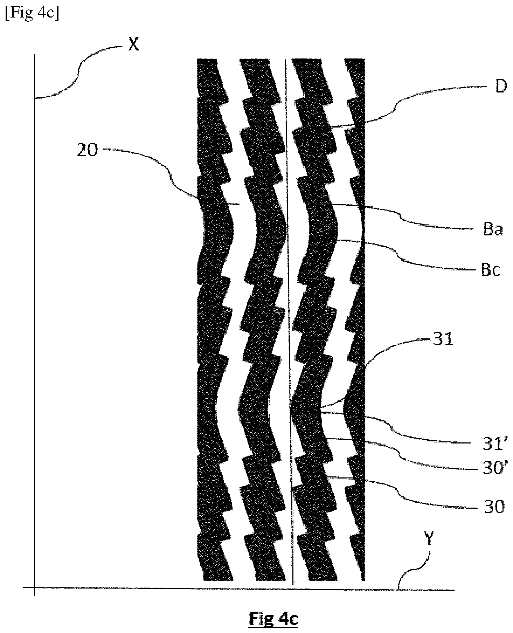

Le circuit de refroidissement ménagé entre la tôle anodique Ta de la figure 4a et la tôle cathodique Tc de la figure 4b est illustré à la figure 4c. Ce circuit de refroidissement permet d'obtenir une direction d'écoulement D qui s'étend sensiblement suivant l'axe longitudinal X. De telles tôles avec des portions courbes 31, 3 1' permettent de réduire les ondulations de l'écoulement du fluide caloporteur qui peuvent être présentes, par exemple dans le mode de réalisation de la figure 2c. Un tel écoulement qui s'étend sensiblement suivant l'axe longitudinal X permet notamment de réduire encore la perte de charge dans les canaux de refroidissement.

## Revendications

1. Plaque bipolaire pour réacteur électrochimique, comportant au moins une tôle anodique (Ta) et une tôle cathodique (Tc), ayant chacune une face interne (102) et une face externe (101), les tôles anodique (Ta) et cathodique (Tc) étant en contact l'une avec l'autre par leur face interne (102), chaque tôle anodique (Ta) et cathodique (Tc) comportant sur sa face externe (101) des canaux (Cd, Cc2, Cc3, Cc4, Ca1, Ca2, Ca3, Ca4) pour la circulation de fluides réactifs, lesdits canaux délimitant, au niveau des faces internes des tôles anodique et cathodique, des conduits de refroidissement (20) pour l'écoulement d'un fluide caloporteur,
les canaux des tôles anodique et cathodique comportant une alternance de bossages (Ba, Bc) et d'enfoncements (Ea, Ec),
les bossages de la tôle anodique (Ba) étant disposés en quinconce et les bossages de la tôle cathodique (Bc) étant disposés en quinconce.

2. Plaque bipolaire selon la revendication précédente, les bossages de la tôle anodique (Ba) étant disposés en quinconce par rapport aux bossages de la tôle cathodique (Bc).

3. Plaque bipolaire selon l'une des revendications précédentes, au moins un bossage de la tôle anodique (Ba) étant en contact avec au moins un bossage de la tôle cathodique (Bc), mieux avec au moins deux bossages, encore mieux avec trois bossages.

4. Plaque bipolaire selon l'une quelconque des revendications précédentes, au moins un bossage de la tôle cathodique (Bc) étant en contact avec au moins un bossage de la tôle anodique (Ba), mieux avec au moins deux bossages, notamment avec deux bossages.

5. Plaque bipolaire selon l'une quelconque des revendications précédentes, les bossages de la tôle anodique étant en contact avec au moins un bossage de la tôle cathodique sur au moins 75% de leur longueur totale, mieux sur au moins 90% de leur longueur totale, encore mieux sur au moins 95% de leur longueur totale.

6. Plaque bipolaire selon l'une quelconques des revendications précédentes, la tôle anodique et la tôle cathodique comportant chacune des motifs composés d'un bossage et d'un enfoncement consécutifs dans un même canal, les motifs de la tôle anodique étant tous d'une première longueur (lₐ) et les motifs de la tôle cathodique (Bc) étant tous d'une deuxième longueur (l_{c}).

7. Plaque bipolaire selon la revendication précédente, la première longueur (lₐ) étant différente de la deuxième longueur (l_{c}).

8. Plaque bipolaire selon la revendication précédente, la première longueur (lₐ) étant supérieure à la deuxième longueur (l_{c}).

9. Plaque bipolaire selon l'une quelconque des revendications 6 à 8, le rapport entre la première (lₐ) et la deuxième (l_{c}) longueur étant sensiblement entier.

10. Plaque bipolaire selon la revendication précédente, le rapport entre la première (lₐ) et la deuxième (l_{c}) longueur étant un entier pair.

11. Plaque bipolaire selon la revendication précédente, le rapport entre la première (lₐ) et la deuxième (l_{c}) longueur étant égal à 2 ou à 4, notamment étant égal à 2.

12. Plaque bipolaire selon l'une quelconque des revendications précédentes, la longueur d'au moins un enfoncement de la tôle anodique (Ea) et/ou de la tôle cathodique (Ec) étant inférieure à la longueur d'au moins un bossage de ladite tôle.

13. Plaque bipolaire selon l'une quelconque des revendications précédentes, la longueur d'au moins un enfoncement de la tôle anodique (Ea) et/ou cathodique (Ec) étant égal à la longueur des bossages.

14. Plaque bipolaire selon l'une quelconque des revendications précédentes, les canaux (Cd, Cc2, Cc3, Cc4, Ca1, Ca2, Ca3, Ca4) comportant des portions courbes (31, 31').

15. Plaque bipolaire selon la revendication précédente, les canaux (Cd, Cc2, Cc3, Cc4, Ca1, Ca2, Ca3, Ca4) et/ou les bossages (Ba, Bc) étant obtenus par emboutissage ou hydroformage des tôles anodique et/ou cathodique.

16. Réacteur électrochimique comportant :
- une plaque bipolaire selon l'une quelconque des revendications précédentes,
- un assemblage membrane/électrode, dont l'une au moins des électrodes est au contact de la tôle anodique (Ta) ou de la tôle cathodique (Tc) de la plaque bipolaire.

## Patentansprüche

1. Bipolarplatte für einen elektrochemischen Reaktor, umfassend mindestens ein Anodenblech (Ta) und ein Kathodenblech (Tc), die jeweils eine Innenseite (102) und eine Außenseite (101) besitzen, wobei die Anodenbleche (Ta) und Kathodenbleche (Tc) über ihre Innenseite (102) in Kontakt miteinander sind, wobei jedes Anodenblech (Ta) und Kathodenblech (Tc) auf seiner Außenseite (101) Kanäle (Cc1, Cc2, Cc3, Cc4, Cal, Ca2, Ca3, Ca4) für die Zirkulation reaktiver Fluide umfasst, wobei die Kanäle, an den Innenseiten der Anoden- und Kathodenbleche Kühlleitungen (20) zum Fließen eines Wärmeträgerfluids begrenzen,
wobei die Kanäle der Anoden- und Kathodenbleche eine Wechselfolge aus Erhebungen (Ba, Bc) und Vertiefungen (Ea, Ec) umfassen,
wobei die Erhebungen des Anodenblechs (Ba) versetzt angeordnet sind und wobei die Erhebungen des Kathodenblechs (Bc) versetzt angeordnet sind.

2. Bipolarplatte nach dem vorhergehenden Anspruch, wobei die Erhebungen des Anodenblechs (Ba) versetzt zu den Erhebungen des Kathodenblechs (Bc) angeordnet sind.

3. Bipolarplatte nach einem der vorhergehenden Ansprüche, wobei mindestens eine Erhebung des Anodenblechs (Ba) mit mindestens einer Erhebung des Kathodenblechs (Bc), besser mit mindestens zwei Erhebungen, noch besser mit drei Erhebungen in Kontakt ist.

4. Bipolarplatte nach einem der vorhergehenden Ansprüche, wobei mindestens eine Erhebung des Kathodenblechs (Bc) mit mindestens einer Erhebung des Anodenblechs (Ba), besser mit mindestens zwei Erhebungen, insbesondere mit zwei Erhebungen in Kontakt ist.

5. Bipolarplatte nach einem der vorhergehenden Ansprüche, wobei die Erhebungen des Anodenblechs mit mindestens einer Erhebung des Kathodenblechs über mindestens 75 % ihrer Gesamtlänge, besser über mindestens 90 % ihrer Gesamtlänge, noch besser über mindestens 95 % ihrer Gesamtlänge in Kontakt sind.

6. Bipolarplatte nach einem der vorhergehenden Ansprüche, wobei das Anodenblech und das Kathodenblech jeweils Muster umfassen, die aus einer Erhebung und einer Vertiefung zusammengesetzt sind und in einem selben Kanal aufeinanderfolgen, wobei alle Muster des Anodenblechs eine erste Länge (lₐ) aufweisen und alle Muster des Kathodenblechs (Bc) eine zweite Länge (l_{c}) aufweisen.

7. Bipolarplatte nach dem vorhergehenden Anspruch, wobei die erste Länge (lₐ) von der zweiten Länge (l_{c}) verschieden ist.

8. Bipolarplatte nach dem vorhergehenden Anspruch, wobei die erste Länge (lₐ) größer als die zweite Länge (l_{c}) ist.

9. Bipolarplatte nach einem der Ansprüche 6 bis 8, wobei das Verhältnis zwischen der ersten (lₐ) und der zweiten (l_{c}) Länge im Wesentlichen ganzzahlig ist.

10. Bipolarplatte nach dem vorhergehenden Anspruch, wobei das Verhältnis zwischen der ersten (lₐ) und der zweiten (l_{c}) Länge eine gerade ganze Zahl ist.

11. Bipolarplatte nach dem vorhergehenden Anspruch, wobei das Verhältnis zwischen der ersten (lₐ) und der zweiten (l_{c}) Länge gleich 2 oder 4 ist, insbesondere gleich 2 ist.

12. Bipolarplatte nach einem der vorhergehenden Ansprüche, wobei die Länge mindestens einer Vertiefung des Anodenblechs (Ea) und/oder des Kathodenblechs (Ec) kleiner als die Länge mindestens einer Erhebung des Blechs ist.

13. Bipolarplatte nach einem der vorhergehenden Ansprüche, wobei die Länge mindestens einer Vertiefung des Anodenblechs (Ea) und/oder Kathodenblechs (Ec) gleich der Länge der Erhebungen ist.

14. Bipolarplatte nach einem der vorhergehenden Ansprüche, wobei die Kanäle (Cc1, Cc2, Cc3, Cc4, Cal, Ca2, Ca3, Ca4) gekrümmte Abschnitte (31, 31') umfassen.

15. Bipolarplatte nach dem vorhergehenden Anspruch, wobei die Kanäle (Cc1, Cc2, Cc3, Cc4, Cal, Ca2, Ca3, Ca4) und/oder die Erhebungen (Ba, Bc) durch Tiefziehen oder Hydroforming der Anoden- und/oder Kathodenbleche erhalten werden.

16. Elektrochemischer Reaktor, umfassend:
- eine Bipolarplatte nach einem der vorhergehenden Ansprüche,
- eine Membran-Elektrode-Anordnung, bei der mindestens eine der Elektroden mit dem Anodenblech (Ta) oder dem Kathodenblech (Tc) der Bipolarplatte in Kontakt ist.

## Claims

1. Bipolar plate for an electrochemical reactor, comprising at least one anode sheet (Ta) and one cathode sheet (Tc), each having an internal face (102) and an external face (101), the anode (Ta) and cathode (Tc) sheets being in contact with each other via their internal face (102), each anode (Ta) and cathode (Tc) sheet comprising, on its external face (101), channels (Cc1, Cc2, Cc3, Cc4, Ca1, Ca2, Ca3, Ca4) for circulating reactive fluids, said channels demarcating, at the internal faces of the anode and cathode sheets, cooling pipes (20) for a flow of a heat transfer fluid,
the channels of the anode and cathode sheets comprising alternating bosses (Ba, Bc) and indentations (Ea, Ec),
the bosses of the anode sheet (Ba) being arranged in a staggered manner and the bosses of the cathode sheet (Bc) being arranged in a staggered manner.

2. Bipolar plate according to the preceding claim, the bosses of the anode sheet (Ba) being arranged in a staggered manner in relation to the bosses of the cathode sheet (Bc).

3. Bipolar plate according to any of the preceding claims, at least one boss of the anode sheet (Ba) being in contact with at least one boss of the cathode sheet (Bc), preferably with at least two bosses, more preferably with three bosses.

4. Bipolar plate according to any one of the preceding claims, at least one boss of the cathode sheet (Bc) being in contact with at least one boss of the anode sheet (Ba), preferably with at least two bosses, in particular with two bosses.

5. Bipolar plate according to any one of the preceding claims, the bosses of the anode sheet being in contact with at least one boss of the cathode sheet over at least 75 % of their total length, preferably over at least 90 % of their total length, more preferably over at least 95 % of their total length.

6. Bipolar plate according to any one of the preceding claims, the anode sheet and the cathode sheet each comprising patterns formed by a consecutive boss and indentation in the same channel, the patterns of the anode sheet all having a first length (lₐ) and the patterns of the cathode sheet (Bc) all having a second length (l_{c}).

7. Bipolar plate according to the preceding claim, the first length (lₐ) being different from the second length (l_{c}).

8. Bipolar plate according to the preceding claim, the first length (lₐ) being greater than the second length (l_{c}).

9. Bipolar plate according to any one of Claims 6 to 8, the ratio of the first (lₐ) to the second (l_{c}) length being a substantially integer ratio.

10. Bipolar plate according to the preceding claim, the ratio of the first (lₐ) to the second (l_{c}) length being an even integer ratio.

11. Bipolar plate according to the preceding claim, the ratio of the first (lₐ) to the second (l_{c}) length being equal to 2 or to 4, in particular being equal to 2.

12. Bipolar plate according to any one of the preceding claims, the length of at least one indentation of the anode sheet (Ea) and/or of the cathode sheet (Ec) being less than the length of at least one boss of said sheet.

13. Bipolar plate according to any one of the preceding claims, the length of at least one indentation of the anode (Ea) and/or cathode (Ec) sheet being equal to the length of the bosses.

14. Bipolar plate according to any one of the preceding claims, the channels (Cc1, Cc2, Cc3, Cc4, Ca1, Ca2, Ca3, Ca4) comprising curved portions (31, 31').

15. Bipolar plate according to the preceding claim, the channels (Cc1, Cc2, Cc3, Cc4, Ca1, Ca2, Ca3, Ca4) and/or the bosses (Ba, Bc) being obtained by stamping or hydroforming anode and/or cathode sheets.

16. Electrochemical reactor comprising:
- a bipolar plate according to any one of the preceding claims,
- a membrane-electrode assembly, at least one of the electrodes of which is in contact with the anode sheet (Ta) or the cathode sheet (Tc) of the bipolar plate.
